# EUROPEAN PATENT APPLICATION

(11) **EP 4 198 794 A1**
(43) Date of publication of application: **21.06.2023**
(21) Application number: 21856161.1
(22) Date of filing: 09.08.2021
(51) Int. Cl.: G06F 21/85, G06F 21/78, G06F 21/55

(54) **COMPARTMENTALIZED SECURITY DEVICE, COMPUTER INCLUDING COMPARTMENTALIZED COMPUTING MODULE, AND HACKING PREVENTION METHOD**

(30) Priority: 11.08.2020 KR 20200100813
(71) Applicant: Lee, Chung Jong, Gangwon-do 26248 (KR)
(72) Inventor: Lee, Chung Jong, Gangwon-do 26248 (KR)
(74) Representative: Gulde & Partner
(86) International application number: PCT/KR2021/010493
(87) International publication number: WO 2022/035155

(57) **Abstract**

A compartmentalized security device, a computer including a compartmentalized computing module, and a hacking prevention method are introduced. A compartmentalized security device according to the present invention automates the process of connecting and disconnecting a data storage device to and from a computer, and thus achieves faster data transfer speed while providing high security. A computer including a compartmentalized computing module and a hacking prevention method according to the present invention enable the compartmentalized computing module to immediately switch off a transmission and reception line upon completion of data transmission and reception, and thus can minimize a risk such as hacking of a second computing module that is not connected to an external network.

## Description

### TECHNICAL FIELD

The present disclosure relates to a compartmentalized security device, a computer including a compartmentalized computing module, and a hacking prevention method. More particularly, the present disclosure relates to a compartmentalized security device selectively connected to first and second devices and recognized by the devices to transmit and receive data by including a switching unit that selectively connects a first connection unit connected to the first device and a second connection unit connected to the second device to a data storage module; a computer including a compartmentalized computing module that minimizes the risk of hacking by immediately switching off a transmission and reception line upon completion of data transmission and reception when data is received from a first computing module connected to an external network or when data is transmitted to the first computing module; and a hacking prevention method.

### BACKGROUND ART

Most computers of today are configured to transmit and receive data by being connected to an external network such as the Internet or an in-house computer network.

As mentioned above, since a computer is always connected to an external network, it is exposed to the risk of being attacked by hacking, adware, ransomware, or viruses from the external network.

Even if a computer is equipped with security measures such as a vaccine program, it is always at risk of being infected with new viruses or hacked through defects in the operating system; in the case of computers for data storage, it is desirable to configure the computers so that they are disconnected from an external network or connection time to the external network is minimized.

However, computer security may not be sufficiently guaranteed by allowing the computer to be connected to an external network only for the moment of transmitting and receiving data.

Meanwhile, in public institutions, people often use a computer not connected to an external network for data storage, separately from a computer connected to the external network. To move data, they connect a USB storage device to a computer connected to the external network, copy the data, disconnect the storage device, and connect the storage device to a computer not connected to the external network to copy the data from the storage device. By doing so, the risk of hacking against computers not connected to the external network is prevented passively.

The data transfer method using a removable storage device described above may be considered to be effective in that the method inherently blocks a data storage computer from being connected to an external network and minimizes the transfer of data or programs unnoticed by the user; however, to transfer data, a user has to perform a process of connecting and disconnecting a removable storage device to and from a computer one by one, which causes inconvenience and yields a considerably low data transfer speed.
(Patent document 1) Korean Patent Laid-Open Publication No. 10-0378522 (Publication date: April 03, 2003)

### SUMMARY

To solve the problems above, an object of the present disclosure is to provide a computer including a compartmentalized computing module that immediately switches off a transmission and reception line upon completion of data transmission and reception when data is received from a first computing module connected to an external network or when data is transmitted to the first computing module, thereby minimizing a risk such as hacking of a second computing module not connected to an external network.

Also, an object of the present disclosure is to provide a compartmentalized security device selectively connected to and recognized by first and second devices by a switching unit, thereby automating a process of connecting and disconnecting a data storage device to and from a computer and thus achieving faster data transfer speed while providing high security.

According to various embodiments of the present disclosure, a computer including a compartmentalized computing module comprises: a first computing module, which includes a first movement data storage unit, that is connected to an external network and stores reception data to be moved to another computing module; a compartmentalized computing module, which includes a third movement data storage unit, that is connected to the first computing module through a third data monitoring line and a third data transmission and reception line, determines through the third data monitoring line whether the reception data exists in the first movement data storage unit of the first computing module, receives the reception data by switching on the third data transmission and reception line when the reception data exists in the first movement data storage unit, switches off the third data transmission and reception line upon completion of reception, and stores completely received reception data; and a second computing module that is not connected to an external network and is connected to the compartmentalized computing module through a fourth data monitoring line and a fourth data transmission and reception line, determines through the fourth data monitoring line whether the reception data exists in the third movement data storage unit of the compartmentalized computing module, receives the reception data by switching on the fourth data transmission and reception line when the reception data exists in the third movement data storage unit, and switches off the fourth data transmission and reception line upon completion of reception.

According to various embodiments of the present disclosure, a compartmentalized security device comprises a printed circuit board embedded in a main body; a first connection unit connected to a first device; a second connection unit connected to a second device; a data storage module storing data transmitted and received to and from the first device or the second device; and a switching unit selectively connecting the first connection unit or the second connection unit to the data storage module, wherein the printed circuit board includes a bus interface controller controlling input and output of data through the first connection unit or the second connection unit, and a data storage module controller supporting a high-speed interface specification for a mass storage medium or a high-speed memory; the bus interface controller and the data storage module controller are installed on the printed circuit board; the bus interface controller transmits and receives data to and from the first device using the first connection unit when the first device is connected to the data storage module by the switching unit and transmits and receives data to and from the second device using the second connection unit when the second device is connected to the data storage module by the switching unit; and the data storage module controller transmits and receives data to and from the data storage module using the high-speed interface specification.

According to various embodiments of the present disclosure, a hacking prevention method for a computer including a compartmentalized computing module, which includes a first computing module, that is connected to an external network and has a first movement data storage unit; a compartmentalized computing module that is connected to the first computing module through a third data monitoring line and a third data transmission and reception line and has a third movement data storage unit; and a second computing module not connected to an external network and connected to the compartmentalized computing module through a fourth data monitoring line and a fourth data transmission and reception line, comprises (a) storing reception data received from an external network in the first movement data storage unit by the first computing module; (b) determining whether the reception data exists in the first movement data storage unit of the first computing module through a third data monitoring line, receiving the reception data by switching on the third data transmission and reception line when the reception data exists in the first movement data storage unit, switching off the third data transmission and reception line upon completion of receiving the reception data, and storing completely received reception data in the third movement data storage unit by the compartmentalized computing module; and (c) determining whether the reception data exists in the third movement data storage unit of the compartmentalized computing module through the fourth data monitoring line, receiving the reception data by switching on the fourth data transmission and reception line when the reception data exists in the third movement data storage unit, and switching off the fourth data transmission and reception line upon completion of receiving the reception data by the second computing module.

### ADVANTAGEOUS EFFECTS

A computer including a compartmentalized computing module and a hacking prevention method according to the present disclosure enable the compartmentalized computing module to immediately switch off a transmission and reception line upon completion of data transmission and reception and thus minimize a risk such as hacking of a second computing module not connected to an external network.

Also, a compartmentalized security device according to the present disclosure automates a process of connecting and disconnecting a data storage device to and from a computer and thus achieves faster data transfer speed while providing high security.

### BRIEF DESCRIPTION OF THE DRAWINGS

FIG. 1 is a block diagram of a computer including a compartmentalized computing module according to one embodiment of the present disclosure.
FIG. 2 is a block diagram of a computer including a compartmentalized computing module according to another embodiment of the present disclosure.
FIG. 3 illustrates a detailed structure of a compartmentalized security device according to one embodiment of the present disclosure.
FIG. 4 is a block diagram of a computer including a compartmentalized computing module according to yet another embodiment of the present disclosure.
FIG. 5 is a first flow diagram of a hacking prevention method according to one embodiment of the present disclosure.
FIG. 6 is a second flow diagram of a hacking prevention method according to one embodiment of the present disclosure.

### DESCRIPTION OF EXEMPLARY EMBODIMENTS

According to an aspect of the present disclosure, a computer including a compartmentalized computing module is proposed, the computer comprising a first computing module including a first movement data storage unit that is connected to an external network and stores reception data to be moved to another computing module; a compartmentalized computing module, which includes a third movement data storage unit, that is connected to the first computing module through a third data monitoring line and a third data transmission and reception line, determines through the third data monitoring line whether the reception data exists in the first movement data storage unit of the first computing module, receives the reception data by switching on the third data transmission and reception line when the reception data exists in the first movement data storage unit, switches off the third data transmission and reception line upon completion of reception, and stores completely received reception data; and a second computing module that is not connected to an external network and is connected to the compartmentalized computing module through a fourth data monitoring line and a fourth data transmission and reception line, determines through the fourth data monitoring line whether the reception data exists in the third movement data storage unit of the compartmentalized computing module, receives the reception data by switching on the fourth data transmission and reception line when the reception data exists in the third movement data storage unit, and switches off the fourth data transmission and reception line upon completion of reception.

In what follows, preferred embodiments of the present disclosure will be described in detail with reference to appended drawings, and it should be noted that the present disclosure is not limited by or confined to the embodiments of the present disclosure.

In what follows, a structure of a computer including a compartmentalized computing module according to one embodiment of the present disclosure will be described.

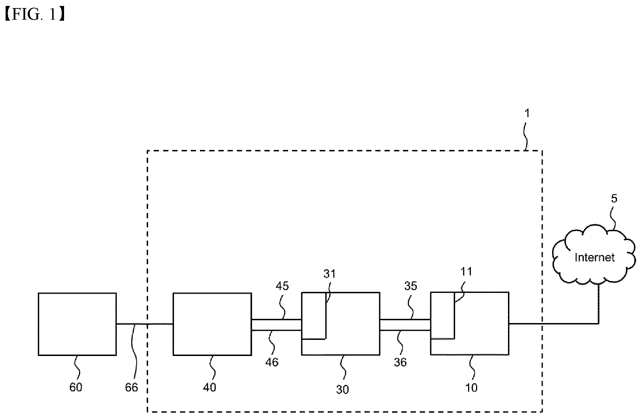

FIG. 1 is a block diagram of a computer including a compartmentalized computing module according to one embodiment of the present disclosure.

A computer 1 including a compartmentalized computing module according to a first embodiment of the present disclosure includes a first computing module 10, a compartmentalized computing module 30, and a second computing module 40.

The term 'computing module' used in the present disclosure refers to devices configured to independently perform individual tasks by including all constituting elements necessary for performing functions as a computer.

Therefore, a computing module does not necessarily have to have an external appearance and user interface commonly implemented for a computer but has to include at least a CPU, a memory, and a storage device; the computing modules used in the computer including the compartmentalized computing module according to the present disclosure may be equipped with a network device for transmitting and receiving data.

If a computing module is required to process various tasks commanded by a user through a user interface, peripheral devices such as a monitor, a keyboard, and a mouse have to be connected to the computing module. Therefore, it is also necessary to include a constituting element such as a GPU.

However, if it is the case that only a limited series of tasks are to be performed for a specific purpose, there is no need to connect peripheral devices such as a monitor, a keyboard, and a mouse to the computing module; thus, there is no need to have a constituting element such as a GPU.

The first computing module 10 is a computing module connected to the external network 5 and includes a first movement data storage unit 11 that stores reception data to be moved to another computing module.

Although FIG. 1 assumes that the external network 5 is the Internet, the external network 5 does not necessarily have to be the Internet; FIG. 1 equally applies to the case in which the first computing module 10 is connected to a closed network operated in a company or a public institution.

Being connected to the external network 5, the first computing module 10 performs a function of receiving reception data to be stored in a data storage computing module (a desktop computer, a notebook computer, a tablet PC, a smartphone, or a PDA) not connected to the external network from the external network 5 and storing the reception data primarily in the first movement data storage unit 11.

Therefore, it is commonly required that the first computing module 10 is configured to connect peripheral devices such as a monitor, a keyboard, and a mouse thereto.

Meanwhile, the term 'reception data' used in the present disclosure refers to the data shown in FIGS. 1, 2, and 4 to be moved from the first computing module 10 to the third computing module 60, and the term 'transmission data' refers to the data to be moved from the third computing module 60 to the first computing module 10.

Reception data and transmission data are stored in the first movement data storage unit 11, which does not necessarily indicate that the transmission data stored in the first movement data storage unit 11 by the first computing module 10 have to be transmitted to the external network 5.

Among the data stored in the second computing module 40, the user classifies the data permitted to be transmitted to the external network 5 as transmission data, transmits the transmission data, stores the transmission data in the first movement data storage unit 11 of the first computing module 10, and transmits the transmission data stored in the first movement data storage unit 11 to the external network 5 when necessary.

As described above, the first movement data storage unit 11 stores the reception data received from the external network 5 and also stores the transmission data transmitted from the second computing module 40.

Data files stored in the first movement data storage unit 11 may be determined as reception data or transmission data according to reception data attributes or transmission data attributes assigned to the properties of individual files.

Alternatively, by designating a reception data storage area and a transmission data storage area in the first movement data storage unit 11 and storing reception data and transmission data in the reception and transmission data storage areas, respectively, reception and transmission data may be managed separately from each other.

Therefore, to transmit data received from the external network 5 to the second computing module 40, the user only has to store the received data in the first movement data storage unit 11 by assigning reception data attributes to the data file or store the data file in the reception data storage area of the first movement data storage unit 11.

Then, the user may transmit the transmission data stored in the first movement data storage unit 11 to the external network 5.

On the other hand, the user may classify the reception data stored in the first movement data storage unit 11 as transmission data again, assign transmission data attributes to the data file, and store the data file in the first movement data storage unit 11 or store the data file in the transmission data storage area of the first movement data storage unit 11.

In the same way, the user may again classify the transmission data stored in the first movement data storage unit 11 as reception data, assign reception data attributes to the data file, and store the data file in the first movement data storage unit 11 or store the data file in the reception data storage area of the first movement storage unit 11.

The compartmentalized computing module 30, which is a computing module connected to the first computing module 10 through a third data monitoring line 35 and a third data transmission and reception line 36, includes a third movement data storage unit 31.

The compartmentalized computing module 30 performs a function of minimizing modification of data or risk of hacking by receiving reception data stored in the first movement data storage unit 11 of the first computing module 10 and physically disconnecting a connection upon completion of data reception.

The lengths of the third data monitoring line 35 and the third data transmission and reception line 36 are not subject to a particular limit and may be about 1 to 2 m; however, it is more desirable that the lines have a very short length of about 5 to 10 cm.

Since the third data monitoring line 35 is used to determine only whether reception data exists in the first movement data storage unit 11 of the first computing module 10, and a large amount of data transmission is not required, it is sufficient to use a PS/2 or RS-232 serial cable.

The compartmentalized computing module 30 determines whether reception data exists in the first movement data storage unit 11 of the first computing module 10 through the third data monitoring line 35, receives the reception data by switching on the third data transmission and reception line 36 when the reception data exists in the first movement data storage unit 11, switches off the third data transmission and reception line 36 upon completion of reception, and stores completely received reception data in the third movement data storage unit 31.

However, it is preferable to operate the compartmentalized computing module 30 to estimate the time required for data reception by considering the size of reception data and the transfer speed of the third data transmission and reception line 36, measure the time elapsed since data reception is initiated, and stop data reception and switch off the third data transmission and reception line 36 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data than the estimated data transmission amount from being received.

Meanwhile, it is preferable to configure the switching of the third data transmission and reception line 36 to be performed by a semiconductor switching element (not shown) to prevent noise generation and data distortion caused when a mechanical switching means is used.

As described above, while maintaining the third data transmission and reception line 36 used for data transmission and reception in a physically disconnected state, the compartmentalized computing module 30 switches on the third data transmission and reception line 36 and transmits and receives data only when data transmission and reception is required and immediately switches off the third data transmission and reception line 36 upon completion of data transmission and reception, thereby minimizing modification of data or risk of hacking.

The second computing module 40 is a computing module not connected to an external network but connected to the compartmentalized computing module 30 through the fourth data monitoring line 45 and the fourth data transmission and reception line 46.

The second computing module 40 performs a function of minimizing modification of data or risk of hacking by receiving reception data stored in the third movement data storage unit 31 of the compartmentalized computing module 30 and physically disconnecting a connection upon completion of data reception.

The lengths of the fourth data monitoring line 45 and the fourth data transmission and reception line 46 are not subject to a particular limit and may be about 1 to 2 m; however, it is more desirable that the lines have a very short length of about 5 to 10 cm.

Since the fourth data monitoring line 45 is used to determine only whether reception data exists in the third movement data storage unit 31 of the compartmentalized computing module 30, and a large amount of data transmission is not required, it is sufficient to use a PS/2 or RS-232 serial cable.

The second computing module 40 determines whether reception data exists in the third movement data storage unit 31 of the compartmentalized computing module 30 through the fourth data monitoring line 45, receives the reception data by switching on the fourth data transmission and reception line 46 when the reception data exists in the third movement data storage unit 31, and switches off the fourth data transmission and reception line 46 upon completion of reception.

However, it is preferable to operate the second computing module 40 to estimate the time required for data reception by considering the size of reception data and the transfer speed of the fourth data transmission and reception line 46, measure the time elapsed since data reception is initiated, and stop data reception and switch off the fourth data transmission and reception line 46 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data than the estimated data transmission amount from being received.

Meanwhile, it is preferable to configure the switching of the fourth data transmission and reception line 46 to be performed by a semiconductor switching element (not shown) to prevent noise generation and data distortion caused when a mechanical switching means is used.

As described above, while maintaining the fourth data transmission and reception line 46 used for data transmission and reception in a physically disconnected state, the second computing module 40 switches on the fourth data transmission and reception line 46 and transmits and receives data only when data transmission and reception is required and immediately switches off the fourth data transmission and reception line 46 upon completion of data transmission and reception, thereby minimizing modification of data or risk of hacking.

The second computing module 40 itself may be used as a computing module for data storage (a desktop computer, a notebook computer, a tablet PC, a smartphone, or a PDA); however, for data storage, it is desirable to use a separate, third computing module 60 connected to the second computing module 40 through a fifth data transmission and reception line 66 (see FIG. 1).

Here, the second computing module 40 performs a function of receiving data required to be transmitted to the external network 5 from the third computing module 60 and transmitting the received data to the first computing module 10 through the compartmentalized computing module 30.

In other words, when transmission data to be moved to the external network 5 exists, the second computing module 40 switches on the fourth data transmission and reception line 46, transmits the transmission data to the third movement data storage unit 31 of the compartmentalized computing module 30, stores the transmission data therein, and switches off the fourth data transmission and reception line 46 upon completion of the transmission.

Meanwhile, the compartmentalized computing module 30 switches on the third data transmission and reception line 36 to transmit the transmission data stored in the third movement data storage unit 31 to the first movement data storage unit 11 of the first computing module 10, stores the transmission data therein, and switches off the third data transmission and reception line 36 upon completion of the transmission.

Here, by allowing connection only up to the maximum connection time after data transmission starts, it is possible to prevent an abnormally large amount of data than the estimated data transmission amount from being transmitted.

The data transmission and reception through the fourth data transmission and reception line 46 may be configured to be performed automatically by a built-in program; however, to improve security, it is preferable to allow a user to directly command transmitting data required to be transmitted to the external network 5 to the first computing module 10 through the compartmentalized computing module 30.

Accordingly, it is commonly required that the second computing module 40 is also configured to connect peripheral devices such as a monitor, a keyboard, and a mouse thereto.

As described above, the first computing module 10, the compartmentalized computing module 30, and the second computing module 40 may be configured to be installed as separate devices in the respective cases (first configuration example); the compartmentalized computing module 30 may be configured to be installed in one case together with the first computing module 10 or the second computing module 40 (second configuration example); and the first computing module 10, the compartmentalized computing module 30, and the second computing module 40 may be configured to be installed together in one case (third configuration example).

When the first computing module 10, the compartmentalized computing module 30, and the second computing module 40 are configured to be installed as separate devices in the respective cases (first configuration example), or the compartmentalized computing module 30 is configured to be installed in one case together with the first computing module 10 or the second computing module 40 (second configuration example), it is desirable that peripheral devices such as monitors, keyboards, and mice are configured to be connected to the first computing module 10 and the second computing module 40, respectively.

Therefore, a user may separately command the first computing module 10 and the second computing module 40 to perform various tasks through the user interface such as a monitor, a keyboard, and a mouse.

When the first computing module 10, the compartmentalized computing module 30, and the second computing module 40 are configured to be installed together in one case (third configuration example), peripheral devices such as monitors, keyboards, and mice may be configured to be connected respectively to the first computing module 10 and the second computing module 40; or a monitor, a keyboard, and a mouse may be configured to be shared between the first computing module 10 and the second computing module 40.

When separate peripheral devices such as monitors, keyboards, and mice are configured to be connected respectively to the first computing module 10 and the second computing module 40, one computer body may be used, but the user may separately command the first computing module 10 and the second computing module 40 to perform various tasks through the user interface such as a monitor, a keyboard, and a mouse in the same way as in the first and second configuration examples.

When the first computing module 10 and the second computing module 40 are configured to share a monitor, a keyboard, and a mouse, they may look the same as a general computer. Internally, however, the first computing module 10, the compartmentalized computing module 30, and the second computing module 40 are operated simultaneously.

In this case, the user determines a computing module to perform a specific task between the first computing module 10 and the second computing module 40 and commands performing a task while the user interface, such as a monitor, a keyboard, or a mouse, is connected to the computing module.

Meanwhile, when the user wants the other computing module to perform a task, the user commands performing the task after switching the user interface, such as a monitor, a keyboard, and a mouse, to be connected to the other computing module.

In what follows, a structure of a computing including a compartmentalized computing module according to another embodiment of the present disclosure will be described.

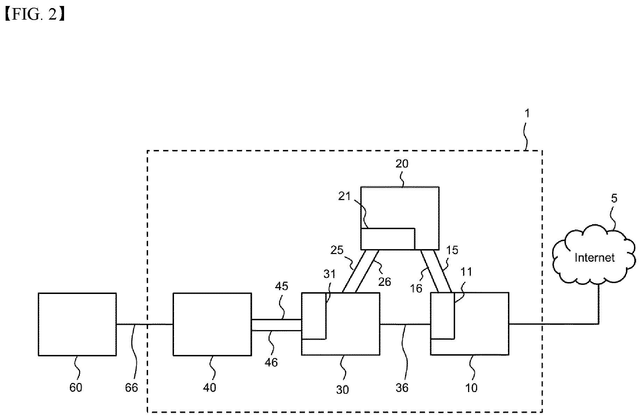

FIG. 2 is a block diagram of a computing including a compartmentalized computing module according to another embodiment of the present disclosure.

A computer 1 including a compartmentalized computing module according to a second embodiment of the present disclosure includes a first computing module 10, an inspection computing module 20, a compartmentalized computing module 30, and a second computing module 40.

Since the first computing module 10 is the same as described in the first embodiment, the descriptions of the first computing module 10 will not be repeated below.

The inspection computing module 20 is a computing module connected to a first computing module 10 through a first data monitoring line 15 and a first data transmission and reception line 16 and includes a second movement data storage unit 21 storing reception data.

The inspection computing module 20 performs a function of minimizing modification of data or risk of hacking by receiving reception data stored in the first movement data storage unit 11 of the first computing module 10, physically disconnecting a connection upon completion of data reception, and determining whether the received reception data is suitable to be moved to another computing module.

The lengths of the first data monitoring line 15 and the first data transmission and reception line 16 are not subject to a particular limit and may be about 1 to 2 m; however, it is more desirable that the lines have a very short length of about 5 to 10 cm.

Since the first data monitoring line 15 is used to determine only whether reception data exists in the first movement data storage unit 11 of the first computing module 10, and a large amount of data transmission is not required, it is sufficient to use a PS/2 or RS-232 serial cable.

The inspection computing module 20 determines whether reception data exists in the first movement data storage unit 11 of the first computing module 10 through the first data monitoring line 15, receives the reception data by switching on the first data transmission and reception line 16 when the reception data exists in the first movement data storage unit 11, and switches off the first data transmission and reception line 16 upon completion of reception.

However, it is preferable to operate the inspection computing module 20 to estimate the time required for data reception by considering the size of reception data and the transfer speed of the first data transmission and reception line 16, measure the time elapsed since data reception is initiated, and stop data reception and switch off the first data transmission and reception line 16 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data than the estimated data transmission amount from being received.

Meanwhile, it is preferable to configure the switching of the first data transmission and reception line 16 to be performed by a semiconductor switching element (not shown) to prevent noise generation and data distortion caused when a mechanical switching means is used.

As described above, while maintaining the first data transmission and reception line 16 used for data transmission and reception in a physically disconnected state, the inspection computing module 20 switches on the first data transmission and reception line 16 and transmits and receives data only when data transmission and reception is required and immediately switches off the first data transmission and reception line 16 upon completion of data transmission and reception, thereby minimizing modification of data or risk of hacking.

When receiving of reception data is completed, the inspection computing module 20 determines whether the received reception data is suitable to be moved to another computing module.

For example, when the data storage computing module allows transmission and storage only for data files but does not allow transmission and storage for program files, the inspection computing module 20 examines whether program code is included in the reception data and determines the reception data to be unsuitable to be moved to another computing module if the reception data includes program code.

To this end, a vaccine program for inspection may be installed in the inspection computing module 20. The engine of the vaccine program may be configured to be updated manually or automatically through an external network.

However, when the engine of the vaccine program is configured to be automatically updated through an external network, to improve security, the inspection computing module 20 should be configured to access only a specific address for updating the engine of the vaccine program.

If a determination result of whether the reception data is suitable to be moved to another computing module indicates that the data is suitable to be moved to another computing module, the inspection computing module 20 stores the reception data in the second movement data storage unit 21.

If a determination result of whether the reception data is suitable to be moved to another computing module indicates that the data is not suitable to be moved to another computing module, the inspection computing module 20 determines whether the reception data is curable and treats the reception data using a vaccine program if the reception data is determined to be curable.

Meanwhile, upon completion of treatment of the reception data, the inspection computing module 20 stores the treated data in the second movement data storage unit 21.

Encryption techniques may be employed for data transmission between the first computing module 10 and the inspection computing module 20 to prevent the reception data stored in the first movement data storage unit 11 of the first computing module 10 from being modified or corrupted.

When an encryption technique is used, and a determination result of whether reception data exists in the first movement data storage unit 11 of the first computing module 10 through the first data monitoring line 15 indicates that the reception data exists in the first mobile data storage unit 11, the inspection computing module 20 switches on the first data transmission and reception line 16, requests the first computing module 10 to encrypt reception data stored in the first movement data storage unit 11 using an encryption key, and switches off the first data transmission and reception line 16.

Then, the inspection computing module 20 determines through the first data monitoring line 15 whether encryption of the reception data is completed. If it is determined that the encryption is completed, the inspection computing module 20 switches on the first data transmission and reception line 16 to receive encrypted data and switches off the first data transmission and reception line 16 when reception of the encrypted data is completed.

When the reception of the encrypted data is completed, the inspection computing module 20 decrypts the received encrypted data using a decryption key and determines whether the decrypted data is suitable to be moved to another computing module.

Here, the encryption method may use a secret key encryption method in which encryption and decryption keys are the same or a public key encryption method in which encryption and decryption keys are different from each other.

By using the encryption method, it is possible to clearly prevent the content of the reception data from being modified or corrupted before or while the inspection computing module 20 receives the reception data after the reception data is stored in the first movement data storage unit 11 of the first computing module 10.

If a determination result of whether the decrypted data is suitable to be moved to another computing module indicates that the decrypted data is suitable to be moved to another computing module, the inspection computing module 20 stores the decrypted data in the second movement data storage unit 21.

If a determination result of whether the decrypted data is suitable to be moved to another computing module indicates that the decrypted data is not suitable to be moved to another computing module, the inspection computing module 20 determines whether the decrypted data is curable and treats the decrypted data using a vaccine program if the decrypted data is determined to be curable.

When the treatment of the decrypted data is completed, the inspection computing module 20 stores the treated data in the second movement data storage unit 21.

The compartmentalized computing module 30, which is a computing module connected to the inspection computing module 20 through the second data monitoring line 25 and the second data transmission and reception line 26 and connected to the first computing module 10 through the third data transmission and reception line 36, includes a third movement data storage unit 31 storing reception data and transmission data.

The compartmentalized computing module 30 performs a function of minimizing modification of data or risk of hacking by receiving reception data, decrypted data, or treated data stored in the second movement data storage unit 21 of the inspection computing module 20 and physically disconnecting a connection upon completion of data reception.

The lengths of the second data monitoring line 25 and the second data transmission and reception line 26 are not subject to a particular limit and may be about 1 to 2 m; however, it is more desirable that the lines have a very short length of about 5 to 10 cm.

Since the second data monitoring line 25 is used to determine only whether reception data, decrypted data, or treated data exists in the second movement data storage unit 21 of the inspection computing module 20, and a large amount of data transmission is not required, it is sufficient to use a PS/2 or RS-232 serial cable.

The compartmentalized computing module 30 determines whether reception data, decrypted data, or treated data exists in the second movement data storage unit 21 of the inspection computing module 20 through the second data monitoring line 25, receives the reception data, decrypted data, or treated data by switching on the second data transmission and reception line 26 when the reception data, decrypted data, or treated data exists in the second movement data storage unit 21, switches off the second data transmission and reception line 26 upon completion of reception, and stores completely received reception data, decrypted data, or treated data in the third movement data storage unit 31.

However, it is preferable to operate the compartmentalized computing module 30 to estimate the time required for data reception by considering the size of reception data, decrypted data, or treated data and the transfer speed of the second data transmission and reception line 26, measure the time elapsed since data reception is initiated, and stop data reception and switch off the second data transmission and reception line 26 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data than the estimated data transmission amount from being received.

Meanwhile, it is preferable to configure the switching of the second data transmission and reception line 26 to be performed by a semiconductor switching element (not shown) to prevent noise generation and data distortion caused when a mechanical switching means is used.

As described above, while maintaining the second data transmission and reception line 26 used for data transmission and reception in a physically disconnected state, the compartmentalized computing module 30 switches on the second data transmission and reception line 26 and transmits and receives data only when data transmission and reception is required and immediately switches off the second data transmission and reception line 26 upon completion of data transmission and reception, thereby minimizing modification of data or risk of hacking.

The second computing module 40 is a computing module not connected to an external network but connected to the compartmentalized computing module 30 through the fourth data monitoring line 45 and the fourth data transmission and reception line 46.

The second computing module 40 performs a function of minimizing modification of data or risk of hacking by receiving reception data, decrypted data, or treated data stored in the third movement data storage unit 31 of the compartmentalized computing module 30 and physically disconnecting a connection upon completion of data reception.

The lengths of the fourth data monitoring line 45 and the fourth data transmission and reception line 46 are not subject to a particular limit and may be about 1 to 2 m; however, it is more desirable that the lines have a very short length of about 5 to 10 cm.

Since the fourth data monitoring line is used to determine only whether reception data, decrypted data, or treated data exists in the third movement data storage unit 31 of the compartmentalized computing module 30, and a large amount of data transmission is not required, it is sufficient to use a PS/2 or RS-232 serial cable.

The second computing module 40 determines whether reception data, decrypted data, or treated data exists in the third movement data storage unit 31 of the compartmentalized computing module 30 through the fourth data monitoring line 45, receives the reception data, decrypted data, or treated data by switching on the fourth data transmission and reception line 46 when the reception data, decrypted data, or treated data exists in the third movement data storage unit 31, and switches off the fourth data transmission and reception line 46 upon completion of reception.

However, it is preferable to operate the second computing module 40 to estimate the time required for data reception by considering the size of reception data, decrypted data, or treated data and the transfer speed of the fourth data transmission and reception line 46, measure the time elapsed since data reception is initiated, and stop data reception and switch off the fourth data transmission and reception line 46 when the elapsed time is noticeably longer than the estimated transfer time.

In other words, by calculating the maximum connection time proportional to the data size and then allowing connection only up to the maximum connection time after data reception starts, it is possible to prevent an abnormally large amount of data than the estimated data transmission amount from being received.

Meanwhile, it is preferable to configure the switching of the fourth data transmission and reception line 46 to be performed by a semiconductor switching element (not shown) to prevent noise generation and data distortion caused when a mechanical switching means is used.

As described above, while maintaining the fourth data transmission and reception line 46 used for data transmission and reception in a physically disconnected state, the second computing module 40 switches on the fourth data transmission and reception line 46 and transmits and receives data only when data transmission and reception is required and immediately switches off the fourth data transmission and reception line 46 upon completion of data transmission and reception, thereby minimizing modification of data or risk of hacking.

The second computing module 40 itself may be used as a computing module for data storage (a desktop computer, a notebook computer, a tablet PC, a smartphone, or a PDA); however, for data storage, it is desirable to use a separate, third computing module 60 connected to the second computing module 40 through a fifth data transmission and reception line 66 (see FIG. 2).

Here, the second computing module 40 performs a function of receiving data required to be transmitted to the external network 5 from the third computing module 60 and transmitting the received data to the first computing module 10 through the compartmentalized computing module 30.

In other words, when transmission data to be moved to the external network 5 exists, the second computing module 40 switches on the fourth data transmission and reception line 46, transmits the transmission data to the third movement data storage unit 31 of the compartmentalized computing module 30, stores the transmission data therein, and switches off the fourth data transmission and reception line 46 upon completion of the transmission.

Meanwhile, the compartmentalized computing module 30 switches on the third data transmission and reception line 36 to transmit the transmission data stored in the third movement data storage unit 31 to the first movement data storage unit 11 of the first computing module 10, stores the transmission data therein, and switches off the third data transmission and reception line 36 upon completion of the transmission.

Here, by allowing connection only up to the maximum connection time after data transmission starts, it is possible to prevent an abnormally large amount of data than the estimated data transmission amount from being transmitted.

The data transmission and reception through the fourth data transmission and reception line 46 may be configured to be performed automatically by a built-in program; however, to improve security, it is preferable to allow a user to directly command transmitting data required to be transmitted to the external network 5 to the first computing module 10 through the compartmentalized computing module 30.

Accordingly, it is commonly required that the second computing module 40 is also configured to connect peripheral devices such as a monitor, a keyboard, and a mouse thereto.

In what follows, a structure of a compartmentalized security device according to one embodiment of the present disclosure will be described.

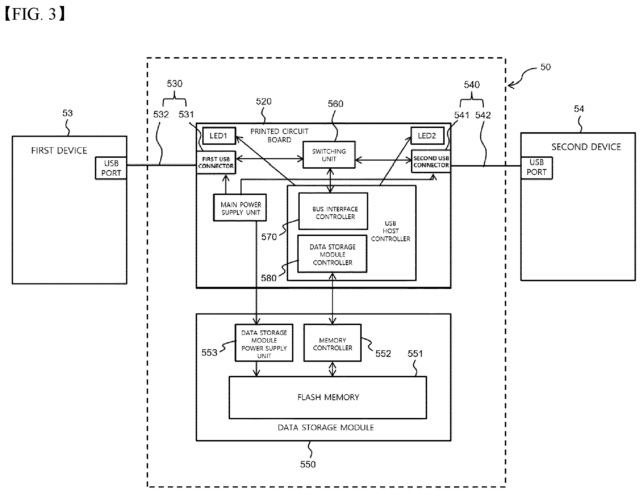

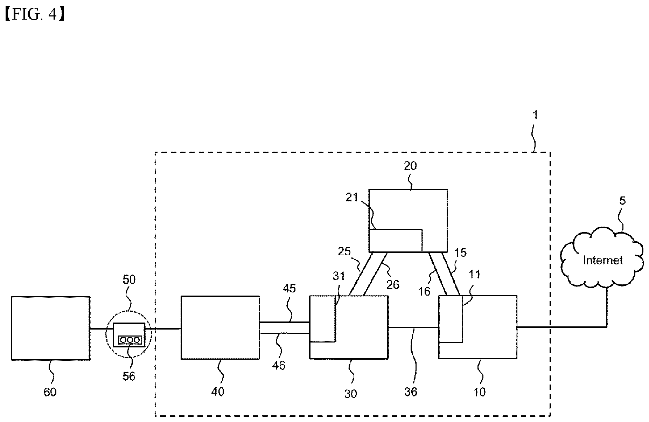

FIG. 3 illustrates a detailed structure of a compartmentalized security device according to one embodiment of the present disclosure, and FIG. 4 is a block diagram of a computer including a compartmentalized computing module according to yet another embodiment of the present disclosure.

The compartmentalized security device 50 according to the present disclosure includes a printed circuit board 520, a first connection unit 530, a second connection unit 540, a data storage module 550, and a switching unit 560.

The printed circuit board 520, a main board on which most of the constituting elements comprising the compartmentalized security device 50 according to the present disclosure are installed, is fixed inside the main body of the compartmentalized security device 50.

A first USB connector 531, a second USB connector 541, a bus interface controller 570, and a data storage module controller 580 are fixed on the printed circuit board 520.

The first USB connector 531 and the second USB connector 541 are connected to the bus interface controller 570 through the switching unit 560. Since the first and second USB connectors are connected to the bus interface controller 570 through a circuit wire pattern of the printed circuit board 520, not through separate cables, signal loss or distortion due to cabling may be prevented.

The first USB connector 531 and the second USB connector 541 are fixed to the printed circuit board 520, the first USB connector 531 is connected to a first device 53 through a first USB cable 532 including connectors at both ends, and a second USB connector 541 is connected to a second device 54 through a second USB cable 542 including connectors at both ends.

The first device 53 and the second device 54 transmit and receive data via the compartmentalized security device 50 according to the present disclosure; various types of computers such as desktop computers, notebook computers, tablet PCs, smartphones, or PDAs or various electronic devices such as removable storage devices implementing a USB OTG function, MP3 players, or PMPs may be used as the first device 53 or the second device 54.

As described above, the compartmentalized security device 50 according to the present disclosure is connected to the first device 53 through the first connection unit 530 including the first USB connector 531 and the first USB cable 532 and is connected to the second device 54 through the second connection unit 540 including the second USB connector 541 and the second USB cable 542.

However, since the first connection unit 530 or the second connection unit 540 is selectively connected to the data storage module 550 by the switching unit 560, the compartmentalized security device 50 according to the present disclosure is selectively connected to the first device 53 and the second device 54 and recognized by the devices to transmit and receive data.

The printed circuit board 520 includes a USB host controller including a bus interface controller 570 and a data storage module controller 580, a main power supply unit, LED 1, and LED 2; and is connected to the first USB connector 531, the first USB cable 532, and the memory controller 552.

Here, the first USB connector 531 is connected to the USB port of the first device 53, the second USB connector 541 is connected to the USB port of the second device 54, and the data storage module controller 580 is connected to the memory controller 552 of the data storage module 550.

It is preferable to shorten the signal line (printed circuit board pattern) between the first USB connector 531, the second USB connector 541, and the memory controller 552 to minimize sensitivity degradation or distortion of a data signal. In this respect, the USB host controller including the bus interface controller 570 and the data storage module controller 580 is configured to be located preferably between the first USB connector 531, the second USB connector 541, and the memory controller 552.

The bus interface controller 570 controls data transmission and reception to and from the first device 53 or the second device 54 through the first USB connector 531 or the second USB connector 541. The bus interface controller 570 may support various standards, including USB 2.0 and USB 3.0 specifications.

The data storage module controller 580 controls data input and output with the data storage module 550 by using a high-speed interface standard used for a mass storage medium such as a computer's hard disk or a high-speed memory.

High-speed interface specifications supported by the data storage module controller 580 include SATA, mini-SATA (mSATA), Universal Flash Storage (UFS) 2.0, UFS 2.1, Ultra High Speed (UHS)-II, and UHS-III.

Therefore, data transmission and reception between the first device 53 or the second device 54 and the printed circuit board 520 is performed through the USB interface under the control of the bus interface controller 570, and data transmission and reception between the printed circuit board 520 and the data storage module 550 is performed through a high-speed interface such as mSATA, UFS 2.0, UFS 2.1, UHS-II, or UHS-III under the control of the data storage module controller 580.

The switching unit 560 is a constituting element that performs a function of selectively connecting the first connection unit 530 or the second connection unit 540 to the data storage module 550. The switching unit 560 is configured to include a switch 56 that allows a user to select a device connected to the data storage module 550.

When a user selects a device to be connected to the data storage module 550 by manipulating the switch 56 exposed to the outside of the compartmentalized security device 50 according to the present disclosure, the switching unit 560 performs switching so that the selected device is connected to the bus interface controller 570.

Meanwhile, it is preferable to configure the switching of the switching unit 560 to be performed by a semiconductor switching element (not shown) to prevent noise generation and data distortion caused when a mechanical switching means is used.

As shown in FIG. 4, the switch 56 exposed to the outside of the compartmentalized security device 50 is provided preferably with buttons for selecting left, central, and right parts.

Here, suppose the first device 53 is connected to the left side of the compartmentalized security device 50 according to the present disclosure, and the second device 54 is connected to the right side thereof. If the user presses or touches the button on the left side, the data storage module 550 is connected preferably to the first device 53; if the user presses or touches the button on the central part, the data storage module 550 is connected preferably to neither the first device 53 nor the second device 54; and if the user presses or touches the button on the right part, the data storage module 550 is connected preferably to the second device 54.

Therefore, when data transfer between the first device 53 and the second device 54 is required, the user may transmit and receive data by manipulating the switch 56 to connect a device to receive data to the data storage module 550, receiving the data, and again manipulating the switch 56 to connect a device to which to transmit the data to the data storage module 550.

Meanwhile, in the normal situation when data transmission and reception are not required, the switching unit 560 maintains the data storage module 550 to be disconnected from the first device 53 or the second device 54. When data transmission and reception are completed, the switching unit 560 disconnects the first device 53 or the second device 54 immediately or after a certain time period. Since data transmission without being noticed by the user is inherently blocked, security improvement may be expected.

The main power supply unit supplies power received from the first device 53 or the second device 54 through the first USB connector 531 and the second USB connector 541 to various constituting elements in the printed circuit board 520.

Even when the data storage module 550 is not connected to the first device 53 or the second device 54 by the switching unit 560, the main power supply unit may receive power from a device connected through the first USB cable 532 or the second USB cable 542 and supply the power to various constituting elements in the printed circuit board 520.

For example, the main power supply unit may receive 5V power through the first USB connector 531 and the second USB connector 541, convert the received power to 3.3 V, and then supply the converted power to various constituting elements in the printed circuit board.

The main power supply also supplies 3.3V power to the data storage module 550 through a power line defined in the high-speed interface standard and also supplies power to LED 1 and LED 2.

It should be noted that the main power unit may also be configured to receive power from a separate power source and supply the received power to various constituting elements in the printed circuit board 520.

The data storage module 550 is a constituting element that performs a function of inputting and outputting data stored in the flash memory 551 through a high-speed interface protocol. The data storage module 550 is configured to include the flash memory 551, the memory controller 552, and the data storage module power supply unit 553.

The flash memory 551 is a constituting element for storing data and preferably employs NAND flash memories.

The memory controller 552 controls the flash memory 51 so that data is input and output according to the high-speed interface protocol.

The data storage module power supply unit 553 supplies power received from the main power supply unit through the power line defined in the high-speed interface standard to the constituting elements in the data storage module 550.

The data storage module 550 may be configured to be integrally fixed to the printed circuit board 520 or configured to be detachable from a high-speed interface port (not shown in the figure) fixed to the printed circuit board 520.

When the data storage module 550 is configured to be detachable from a high-speed interface port, a portable storage device in wide use, such as a USB memory, may be used as the flash memory 551.

On the other hand, when the data storage module 550 is configured to be integrally fixed to the printed circuit board 520, the main power supply unit and the data storage module power supply unit 553 may be configured to form a single power supply unit and fixed on the printed circuit board 520.

The compartmentalized security device according to the present disclosure has an advantage of providing high security by automating the process of connecting and disconnecting a data storage device to and from a computer and increasing the data transfer speed.

In what follows, a structure of a computer including a compartmentalized computing module according to yet another embodiment of the present disclosure will be described.

As shown in FIG. 4, the computer 1 including a compartmentalized computing module according to a third embodiment of the present disclosure is configured to include a first computing module 1, an inspection computing module 20, a compartmentalized computing module 30, a second computing module 40, and a third computing module 60, where a compartmentalized security device 50 is connected between the second computing module 40 and the third computing module 60.

Since the first computing module 10, the inspection computing module 20, the compartmentalized computing module 30, and the second computing module 40 are the same as described in the second embodiment, descriptions thereof will not be repeated below.

Different from the configuration of the compartmentalized security device 50 described above, the compartmentalized security device 50 used in the computer 1 including a compartmentalized computing module according to the present embodiment is configured so that the first connection unit 530 is connected to the second computing module 40, and the second connection unit 540 is connected to the third computing module 60.

In the computer 1 including a compartmentalized computing module according to the present embodiment, the compartmentalized security device 50 is connected between the second computing module 40 and the third computing module 60.

Accordingly, when data received through the first computing module 10, the inspection computing module 20, and the compartmentalized computing module 30 is to be moved from the second computing module 40 to the third computing module 60, the user has to manipulate the switch 56 to connect the second computing module 40 to the data storage module 550, receive data from the second computing module 40 to the compartmentalized security device 50, again manipulate the switch 56 to connect the third computing module 60 to the data storage module 550, and transmit data from the compartmentalized security device 50 to the third computing module 60.

Meanwhile, in the normal situation when data transmission and reception are not required, the switching unit 560 maintains the data storage module 550 to be disconnected from the second computing module 40 or the third computing module 60. When data transmission and reception are completed, the switching unit 560 disconnects the second computing module 40 or the third computing module 60 immediately or after a certain time period. Since data transmission without being noticed by the user is inherently blocked, security improvement may be expected.

In what follows, details of a hacking prevention method according to one embodiment of the present disclosure will be described.

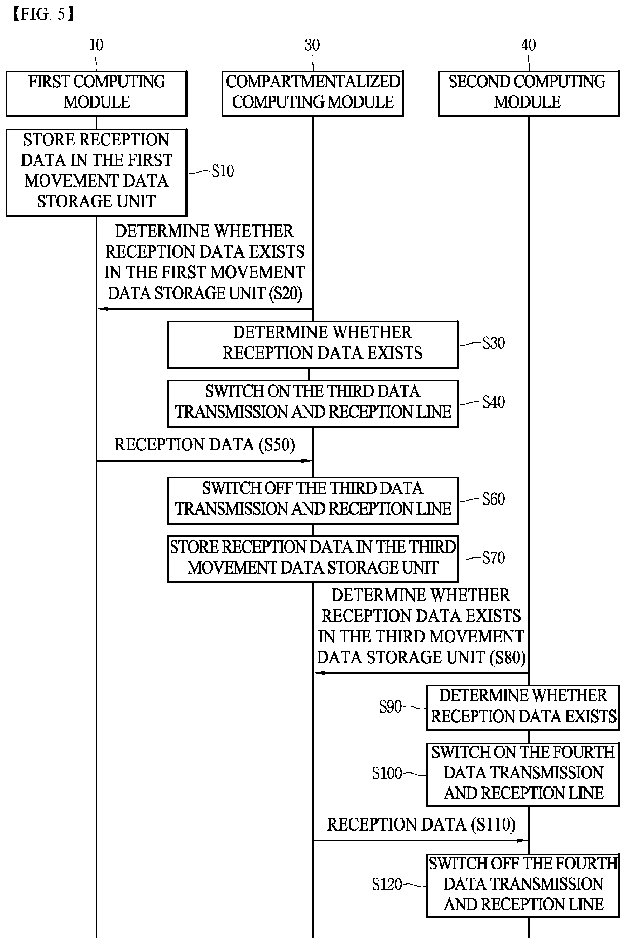

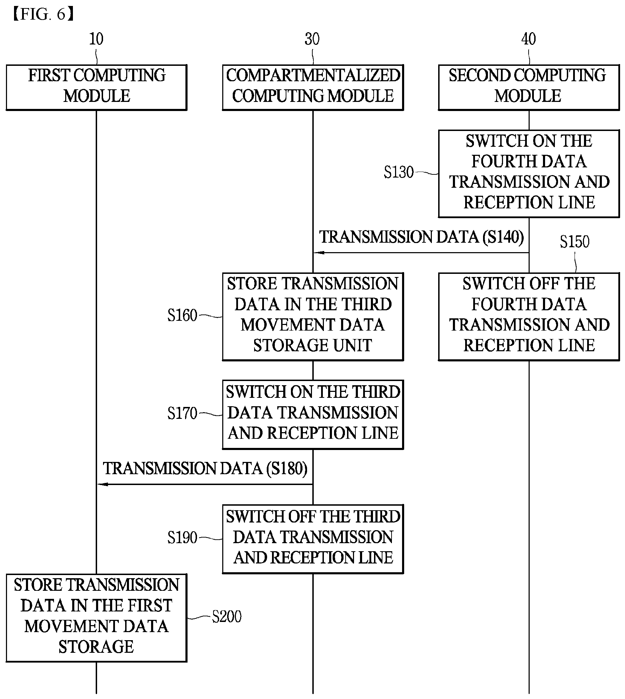

FIG. 5 is a first flow diagram of a hacking prevention method according to one embodiment of the present disclosure, and FIG. 6 is a second flow diagram of a hacking prevention method according to one embodiment of the present disclosure.

FIG. 5 is a first flow diagram of a hacking prevention method according to one embodiment of the present disclosure, which illustrates a process of transferring reception data from the first computing module 10 to the second computing module 40.

Being connected to the external network 5, the first computing module 10 receives various data from the external network 5. Among the received data, the first computing module 10 primarily stores, in the first movement data storage unit 11, the reception data to be stored in the second computing module 40 or the third computing module 60 not connected to the external network S10.

The compartmentalized computing module 30 determines whether reception data exists in the first movement data storage unit 11 of the first computing module 10 through the third data monitoring line 35, S20.

If it is determined that the reception data exists in the first movement data storage unit 11 of the first computing module 10, S30, the compartmentalized computing module 30 switches on the third data transmission and reception line 36, S40, receives the reception data S50, switches off the third data transmission and reception line 36 upon completion of data reception S60, and stores completely received reception data in the third movement data storage unit 31, S70.

The second computing module 40 determines through the fourth data monitoring line 45 whether reception data exists in the third movement data storage unit 31 of the compartmentalized computing module 30, 580.

If it is determined that the reception data exists in the third movement data storage unit 31 of the compartmentalized computing module 30, S90, the second computing module 40 switches on the fourth data transmission and reception line 46, S 100, receives the reception data S 110, and switches off the fourth data transmission and reception line 46 upon completion of data reception S 120.

FIG. 6 is a second flow diagram of a hacking prevention method according to one embodiment of the present disclosure, which illustrates a process of transferring transmission data from the second computing module 40 to the first computing module 10.

The second computing module 40 receives data by being connected to a data storage computing module (a desktop computer, a notebook computer, a tablet PC, a smartphone, or a PDA) not connected to an external network, like the third computing module 60 and stores the received data in the second computing module 40.

If the stored data includes transmission data to be moved to the first computing module 10 or to the external network, the second computing module 40 switches on the fourth data transmission and reception line 46, S130, transmits the transmission data to the compartmentalized computing module 30, S140, and switches off the fourth data transmission and reception line 46 upon completion of transmission S150.

Then the transmission data is stored in the third movement data storage unit 31 of the compartmentalized computing module 30, S160.

At this time, the S150 and S160 steps do not necessarily have to be performed sequentially; the S160 step may be performed independently and simultaneously with the S 140 or S 150 step, or the S150 step may be performed after the S160 step.

If transmission data exists in the third movement data storage unit 31, the compartmentalized computing module 30 switches on the third data transmission and reception line 36, S170, transmits the transmission data to the first computing module 10, and switches off the third data transmission and reception line 36 upon completion of transmission S190.

Then the transmission data is stored in the first movement data storage unit 11 of the first computing module 10, S200.

At this time, the S190 and S200 steps do not necessarily have to be performed sequentially; the S200 step may be performed independently and simultaneously with the S180 or S190 step, or the S190 step may be performed after the S200 step.

Subsequently, if necessary, the user manipulates the first computing module 10 through a user interface and transmits the transmission data stored in the first movement data storage unit 11 to the external network 5.

A computer including a compartmentalized computing module and a hacking prevention method according to the present disclosure enable the compartmentalized computing module to immediately switch off a transmission and reception line upon completion of data transmission and reception and thus minimize a risk such as hacking of a second computing module not connected to an external network.

Throughout the document, the present disclosure has been described in detail according to the embodiments; however, the present disclosure is not limited to the embodiments but may be modified or changed in various ways without deviating from the technical principles and scope of the present disclosure. Therefore, the modifications or changes should be interpreted to belong to the technical scope of the present disclosure.

### [Detailed Description of Main Elements]

| | | | |
|---|---|---|---|
| 1: | Computer including a compartmentalized computing module | | |
| 10: | First computing module | 11: | First movement data storage unit |
| 15: | First data monitoring line | 16: | First data transmission and reception line |
| 20: | Inspection computing module | 21: | Second movement data storage unit |
| 25: | Second data monitoring line | 26: | Second data transmission and reception line |
| 30: | Compartmentalized computing module | 31: | Third movement data storage unit |
| 35: | Third data monitoring line | 36: | Third data transmission and reception line |
| 40: | Second computing module | | |
| 45: | Fourth data monitoring line | 46: | Fourth data transmission and reception line |
| 50: | Compartmentalized security device | 53: | First device |
| 54: | Second device | 56: | Switch |
| 520: | Printed circuit board | | |
| 530: | First connection unit | | |
| 531: | First USB connector | 532: | First USB cable |
| 540: | Second connection unit | | |
| 541: | Second USB connector | 542: | Second USB cable |
| 550: | Data storage module | 551: | Flash memory |
| 552: | Memory controller | 553: | Data storage module power supply unit |
| 560: | Switching unit | | |
| 570: | Bus interface controller | 580: | Data storage module controller |
| 60: | Third computing module | | |
| 66: | Fifth data transmission and reception line | | |

### INDUSTRIAL AVAILABILITY

The present disclosure relates to a compartmentalized security device, a computer including a compartmentalized computing module, and a hacking prevention method. The present disclosure automates a process of connecting and disconnecting a data storage device to and from a computer and thus achieves faster data transfer speed while providing high security; and enables the compartmentalized computing module to immediately switch off a transmission and reception line upon completion of data transmission and reception and thus minimizes a risk such as hacking of a second computing module not connected to an external network, which may be used in the fields such as computer manufacturing and computer security.

## Claims

1. A computer 1 including a compartmentalized computing module 30, the computer 1 comprising:
a first computing module 10, which includes a first movement data storage unit 11, that is connected to an external network and stores reception data to be moved to another computing module;
a compartmentalized computing module 30, which includes a third movement data storage unit 31, that is connected to the first computing module 10 through a third data monitoring line 35 and a third data transmission and reception line 36, determines through the third data monitoring line 35 whether the reception data exists in the first movement data storage unit 11 of the first computing module 10, receives the reception data by switching on the third data transmission and reception line 36 when the reception data exists in the first movement data storage unit 11, switches off the third data transmission and reception line 36 upon completion of reception, and stores completely received reception data; and
a second computing module 40 that is not connected to an external network and is connected to the compartmentalized computing module 30 through a fourth data monitoring line 45 and a fourth data transmission and reception line 46, determines through the fourth data monitoring line 45 whether the reception data exists in the third movement data storage unit 31 of the compartmentalized computing module 30, receives the reception data by switching on the fourth data transmission and reception line 46 when the reception data exists in the third movement data storage unit 31, and switches off the fourth data transmission and reception line 46 upon completion of reception.

2. A computer 1 including a compartmentalized computing module 30, the computer 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data; and
a second computing module 40 that is not connected to an external network and is connected to the compartmentalized computing module 30 through a fourth data monitoring line 45 and a fourth data transmission and reception line 46,
wherein the inspection computing module 20
determines through the first data monitoring line 15 whether the reception data exists in the first movement data storage unit 11 of the first computing module 10, receives the reception data by switching on the first data transmission and reception line 16 when the reception data exists in the first movement data storage unit 11, and switches off the first data transmission and reception line 16 upon completion of reception, and
determines whether the received reception data is suitable to be moved to another computing module upon completion of receiving the reception data and stores the reception data in the second movement data storage unit 21 if the determination indicates that the reception data is suitable to be moved to another computing module,
the compartmentalized computing module 30
determines through the second data monitoring line 25 whether the reception data exists in the second movement data storage unit 21 of the inspection computing module 20, receives the reception data by switching on the second data transmission and reception line 26 when the reception data exists in the second movement data storage unit 21, switches off the second data transmission and reception line 26 upon completion of reception, and stores completely received reception data in the third movement data storage unit 31, and
the second computing module 40
determines through the fourth data monitoring line 45 whether the reception data exists in the third movement data storage unit 31 of the compartmentalized computing module 30, receives the reception data by switching on the fourth data transmission and reception line 46 when the reception data exists in the third movement data storage unit 31, and switches off the fourth data transmission and reception line 46 upon completion of reception.

3. The computer 1 of claim 2, wherein, if a determination result of whether the reception data received upon completion of receiving the reception data is suitable to be moved to another computing module indicates that the reception data is not suitable to be moved to another computing module, the inspection computing module 20 treats the reception data using a vaccine program if the reception data is determined to be curable and
stores the treated data in the second movement data storage unit 21 upon completion of treatment of the reception data,
wherein the compartmentalized computing module 30
determines through the second data monitoring line 25 whether the reception data or the treated data exists in the second movement data storage unit 21 of the inspection computing module 20, receives the reception data or the treated data by switching on the second data transmission and reception line 26 if the reception data or the treated data exists in the second movement data storage unit 21, switches off the second data transmission and reception line 26 upon completion of reception, and stores completely received reception data or treated data in the third movement data storage unit 31, and
the second computing module 40
determines through the fourth data monitoring line 45 whether the reception data or the treated data exists in the third movement data storage unit 31 of the compartmentalized computing module 30, receives the reception data or the treated data by switching on the fourth data transmission and reception line 46 if the reception data or the treated data exists in the third movement data storage unit 31, and switches off the fourth data transmission and reception line 46 upon completion of reception.

4. A computer 1 including a compartmentalized computing module 30, the computer 1 comprising:
a first computing module 10, which includes a first movement data storage unit 11, that is connected to an external network and stores reception data to be moved to another computing module and transmission data to be moved to the external network;
an inspection computing module 20, which includes a second movement data storage unit 21, that is connected to the first computing module 10 through a first data monitoring line 15 and a first data transmission and reception line 16 and stores the reception data;
a compartmentalized computing module 30, which includes a third movement data storage unit 31, that is connected to the inspection computing module 20 through a second data monitoring line 25 and a second data transmission and reception line 26, is connected to the first computing module 10 through a third data transmission and reception line 36, and stores the reception data and the transmission data; and
a second computing module 40 that is not connected to an external network and is connected to the compartmentalized computing module 30 through a fourth data monitoring line 45 and a fourth data transmission and reception line 46,
wherein the inspection computing module 20
determines through the first data monitoring line 15 whether the reception data exists in the first movement data storage unit 11 of the first computing module 10, requests the first computing module 10 to encrypt the reception data using an encryption key by switching on the first data transmission and reception line 16 when the reception data exists in the first movement data storage unit 11, and switches off the first data transmission and reception line 16,
determines whether encryption of the reception data is completed through the first data monitoring line 15, receives encrypted data by switching on the first data transmission and reception line 16 upon completion of encryption, and switches off the first data transmission and reception line 16 upon completion of reception,
decrypts the encrypted data using a decryption key upon completion of receiving the encrypted data, determines whether the decrypted data is suitable to be moved to another computing module, and
stores the decrypted data in the second movement data storage unit 21 if the determination indicates that the decrypted data is suitable to be moved to another computing module,
the compartmentalized computing module 30
determines through the second data monitoring line 25 whether the decrypted data exists in the second movement data storage unit 21 of the inspection computing module 20, receives the decrypted data by switching on the second data transmission and reception line 26 when the decrypted data exists in the second movement data storage unit 21, switches off the second data transmission and reception line 26 upon completion of reception, and stores completely received decrypted data in the third movement data storage unit 31, and
the second computing module 40
determines through the fourth data monitoring line 45 whether the decrypted data exists in the third movement data storage unit 31 of the compartmentalized computing module 30, receives the decrypted data by switching on the fourth data transmission and reception line 46 when the decrypted data exists in the third movement data storage unit 31, and switches off the fourth data transmission and reception line 46 upon completion of reception.

5. The computer 1 of claim 4, wherein, if a determination result of whether the decrypted data upon completion of decrypting the encrypted data is suitable to be moved to another computing module indicates that the decrypted data is not suitable to be moved to another computing module, the inspection computing module 20 treats the decrypted data using a vaccine program if the decrypted data is determined to be curable and
stores the treated data in the second movement data storage unit 21 upon completion of treatment of the decrypted data,
wherein the compartmentalized computing module 30
determines through the second data monitoring line 25 whether the decrypted data or the treated data exists in the second movement data storage unit 21 of the inspection computing module 20, receives the decrypted data or the treated data by switching on the second data transmission and reception line 26 if the decrypted data or the treated data exists in the second movement data storage unit 21, switches off the second data transmission and reception line 26 upon completion of reception, and stores completely received decrypted data or treated data in the third movement data storage unit 31, and
the second computing module 40
determines through the fourth data monitoring line 45 whether the decrypted data or the treated data exists in the third movement data storage unit 31 of the compartmentalized computing module 30, receives the decrypted data or the treated data by switching on the fourth data transmission and reception line 46 if the decrypted data or the treated data exists in the third movement data storage unit 31, and switches off the fourth data transmission and reception line 46 upon completion of reception.

6. The computer 1 of any one of claims 1 to 5, wherein, if transmission data to be moved to an external network exists, the second computing module 40 switches on the fourth data transmission and reception line 46, transmits the transmission data to the third movement data storage unit 31 of the compartmentalized computing module 30, and switches off the fourth data transmission and reception line 46 upon completion of the transmission, and
the compartmentalized computing module 30
switches on the third data transmission and reception line 36, transmits the transmission data stored in the third movement data storage unit 31 to the first movement data storage unit 11 of the first computing module 10, and switches off the third data transmission and reception line 36 upon completion of the transmission.

7. A compartmentalized security device 50 comprising:
a printed circuit board 520 embedded in a main body;
a first connection unit 530 connected to a first device 53;
a second connection unit 540 connected to a second device 54;
a data storage module 550 storing data transmitted and received to and from the first device 53 or the second device 54; and
a switching unit 560 selectively connecting the first connection unit 530 or the second connection unit 540 to the data storage module 550,
wherein the printed circuit board 520 includes:
a bus interface controller 570 controlling input and output of data through the first connection unit 530 or the second connection unit 540; and
a data storage module 550 controller supporting a high-speed interface specification for a mass storage medium or a high-speed memory,
the bus interface controller 570 and the data storage module 550 controller are installed on the printed circuit board 520,
the bus interface controller 570
transmits and receives data to and from the first device 53 using the first connection unit 530 when the first device 53 is connected to the data storage module 550 by the switching unit 560 and
transmits and receives data to and from the second device 54 using the second connection unit 540 when the second device 54 is connected to the data storage module 550 by the switching unit 560; and
the data storage module 550 controller transmits and receives data to and from the data storage module 550 using the high-speed interface specification.

8. The device of claim 7, wherein the first connection unit 530 includes a first USB connector 531 and a first USB cable 532, and
the second connection unit 540 includes a second USB connector 541 and a second USB cable 542.

9. The device of claim 8, wherein the memory storage module includes:
a flash memory 551;
a memory controller 552controlling data input and output of the flash memory 551 using the high-speed interface specification; and
a data storage module 550 power supply unit receiving power supplied through the first USB connector 531 and the second USB connector 541 and supplying power within the data storage module 550.

10. The device of any one of claims 7 to 9, wherein the high-speed interface specification is one of mini-SATA, UFS 2.0, UFS 2.1, UHS-II, and UHS-III.

11. The computer 1 of any one of claims 1 to 5, further including a third computing module 60 not connected to an external network,
wherein a compartmentalized security device 50 is connected between the second computing module 40 and the third computing module 60,
the compartmentalized security device 50 includes,
a printed circuit board 520 embedded in a main body;
a first connection unit 530 connected to the second computing module 40;
a second connection unit 540 connected to the third computing module 60;
a data storage module 550 storing data transmitted and received to and from the second computing module 40 or the third computing module 60; and
a switching unit 560 selectively connecting the first connection unit 530 or the second connection unit 540 to the data storage module 550,
the printed circuit board 520 includes
a bus interface controller 570 controlling input and output of data through the first connection unit 530 or the second connection unit 540; and
a data storage module 550 controller supporting a high-speed interface specification for a mass storage medium or a high-speed memory,
the bus interface controller 570 and the data storage module 550 controller are installed on the printed circuit board 520,
the bus interface controller 570
transmits and receives data to and from the second computing module 40 using the first connection unit 530 when the second computing module 40 is connected to the data storage module 550 by the switching unit 560 and
transmits and receives data to and from the third computing module 60 using the second connection unit 540 when the third computing module 60 is connected to the data storage module 550 by the switching unit 560; and
the data storage module 550 controller transmits and receives data to and from the data storage module 550 using the high-speed interface specification.

12. The computer 1 of claim 11, wherein the first connection unit 530 includes a first USB connector 531 and a first USB cable 532, and
the second connection unit 540 includes a second USB connector 541 and a second USB cable 542.

13. The computer 1 of claim 12, wherein the memory storage module includes:
a flash memory 551;
a memory controller 552controlling data input and output of the flash memory 551 using the high-speed interface specification; and
a data storage module 550 power supply unit receiving power supplied through the first USB connector 531 and the second USB connector 541 and supplying power within the data storage module 550.

14. The computer 1 of claim 11, wherein the high-speed interface specification is one of mini-SATA, UFS 2.0, UFS 2.1, UHS-II, and UHS-III.

15. A hacking prevention method for a computer 1 including a compartmentalized computing module 30, which includes a first computing module 10, that is connected to an external network and has a first movement data storage unit 11; a compartmentalized computing module 30 that is connected to the first computing module 10 through a third data monitoring line 35 and a third data transmission and reception line 36 and has a third movement data storage unit 31; and a second computing module 40 not connected to an external network and connected to the compartmentalized computing module 30 through a fourth data monitoring line 45 and a fourth data transmission and reception line 46, the method comprising:
(a) storing reception data received from an external network in the first movement data storage unit 11 by the first computing module 10;
(b) determining whether the reception data exists in the first movement data storage unit 11 of the first computing module 10 through a third data monitoring line 35, receiving the reception data by switching on the third data transmission and reception line 36 when the reception data exists in the first movement data storage unit 11, switching off the third data transmission and reception line 36 upon completion of receiving the reception data, and storing completely received reception data in the third movement data storage unit 31 by the compartmentalized computing module 30; and
(c) determining whether the reception data exists in the third movement data storage unit 31 of the compartmentalized computing module 30 through the fourth data monitoring line 45, receiving the reception data by switching on the fourth data transmission and reception line 46 when the reception data exists in the third movement data storage unit 31, and switching off the fourth data transmission and reception line 46 upon completion of receiving the reception data by the second computing module 40.

16. The method of claim 15, further including:
(d) switching on the fourth data transmission and reception line 46 if transmission data to be moved to an external network exists, transmitting the transmission data to the third movement data storage unit 31 of the compartmentalized computing module 30, and switching off the fourth data transmission and reception line 46 upon completion of transmitting the transmission data by the second computing module 40, and
(e) switching on the third data transmission and reception line 36, transmitting the transmission data stored in the third movement data storage unit 31 to the first movement data storage unit 11 of the first computing module 10, and switching off the third data transmission and reception line 36 upon completion of transmitting the transmission data by the compartmentalized computing module 30.
